# NEUE EUROPÄISCHE PATENTSCHRIFT

(11) **EP 3 076 248 B2**
(45) Veröffentlichungstag und Bekanntmachung des Hinweises auf die Entscheidung über den Einspruch: **24.06.2026**
(45) Hinweis auf die Patenterteilung: 21.06.2023
(21) Anmeldenummer: 16151685.1
(22) Anmeldetag: 18.01.2016
(51) Int. Cl.: G05B 17/02, A01D 41/127, G05B 13/02

(54) **MÄHDRESCHER**
COMBINE HARVESTER
MOISSONNEUSE-BATTEUSE

(30) Priorität: 02.04.2015 DE 102015004174
(43) Veröffentlichungstag der Anmeldung: 05.10.2016
(73) Patentinhaber: CLAAS Selbstfahrende Erntemaschinen GmbH, 33428 Harsewinkel (DE)
(72) Erfinder: Heitmann, Christoph, 48231 Warendorf (DE); Wilken, Andreas, 49143 Bissendorf (DE); Baumgarten, Dr., Joachim, 48361 Beelen (DE); Neu, Sebastian, 49196 Bad Laer (DE); Bussmann, Christoph, 33428 Harsewinkel (DE); Vöcking, Henner, 33397 Rietberg (DE); Terörde, Stefan, 48231 Warendorf (DE); Vieregge, Christopher, 32694 Dörentrup (DE)
(74) Vertreter: CLAAS Gruppe

(56) Entgegenhaltungen:
- EP-A2- 2 401 905
- EP-A2- 2 687 924
- EP-A2- 2 837 279

## Beschreibung

Die Erfindung betrifft einen Mähdrescher mit den Merkmalen des Oberbegriffs von Anspruch 1.

Mähdrescher dienen der Mahd und dem Drusch von Körnerfrüchten. Dabei erfolgt der Drusch durch ein Dreschwerk, welches aus dem von dem Mähdrescher durch das Schneidwerk aufgenommenen Erntegut Korngut gewinnt, das nach dem Dreschen einer Abscheidung und einer anschließenden Reinigung einem Getreidetank zugeführt wird. Als weitere Bestandteile des Ernteguts bleiben weiter z. B. die Spreu und das Stroh übrig, welche entweder über das Feld verteilt oder - im Falle des Strohs - auf Schwad z.B. zur späteren Aufnahme durch eine Ballenpresse gelegt werden können. Hier und nachfolgend ist unter dem Begriff Erntegut der gesamte vom Dreschwerk aufgenommene Gutstrom zu verstehen, also einschließlich derjenigen Körner, welche noch nicht als Korngut aus dem Erntegut gewonnen wurden, und den Körnern, welche ggf. in dem Erntegutstrom als Verlust verbleiben und mit dem Stroh abgelegt werden.

Im Dreschwerk wird das Korn durch eine im Prinzip wälzende Bearbeitung aus dem Stroh gerieben - ausgedroschen - und vom übrigen Erntegutstrom getrennt, sodass es direkt der Reinigung zugeführt werden kann. Der übriggebliebene Erntegutstrom wird dann dem Abscheidebereich zugeführt, in welchem z.B. durch eine Schüttleranordnung das verbliebene Korn von dem Erntegutstrom getrennt und danach ebenfalls der Reinigung zugeführt wird.

Es gibt nun eine ganze Reihe von Kriterien, anhand derer die Güte des Dreschvorgangs beurteilt werden kann. Erstens sollen möglichst alle Körner aus dem Erntegutstrom entfernt und dem Korntank zugeführt werden, und zwar mit möglichst wenig gebrochenen Körnern - Bruchkörnern - und einem geringen Nichtkornanteil im Korngut. Zweitens soll ggf. auch das Stroh nicht so stark zerstört und z.B. zerschnitten werden, dass die spätere Verwertung erschwert wird. Drittens soll die für die Bearbeitung eines Feldes benötigte Zeit kurz und der dabei verbrauchte Kraftstoff möglichst gering gehalten werden. Weitere Gütekriterien sind hier denkbar. In Abhängigkeit von der Gesamtsituation, insbesondere von den jeweiligen wirtschaftlichen Rahmenbedingen, stehen unterschiedliche Gütekriterien im Vordergrund, die sich zu einer Ernteprozeßstrategie für die Durchführung des Ernteprozesses zusammensetzen.

Das Erfüllen der obigen Gütekriterien setzt voraus, dass das Dreschwerk auf bestimmte Art und Weise angesteuert wird, wobei diese Art und Weise nicht nur von den speziellen Gütekriterien, sondern auch von verschiedenen Bedingungen der Umgebung, des Mähdreschers und insbesondere des Dreschwerks selbst sowie der Beschaffenheit und Zusammensetzung des Ernteguts abhängt. Dabei bedeutet die Priorisierung des einen Gütekriteriums regelmäßig einen Nachteil für ein anderes Gütekriterium.

Aus dem Stand der Technik und speziell aus der EP 1 731 017 B2 ist es bekannt, in einer Steuervorrichtung einen speziellen Steuerungsprozess für die Optimierung des Dreschwerks - den Dreschwerksoptimierungsprozess - vorzusehen. Wenn dieser Steuerungsprozess aktiviert wird, setzt er am Dreschwerk "optimale" Dreschwerkeinstellungen und schaltet sich dann ab. Dabei läuft dieser Dreschwerksoptimierungsprozess stets gleich und insbesondere mit den gleichen Einstellungen ab. Das Aktivieren des Dreschwerksoptimierungsprozesses schaltet ferner einen ggf. aktuell ablaufenden Regelungsprozess für die Fahrgeschwindigkeit des Mähdreschers ab, sodass dieser nicht gleichzeitig ablaufen kann.

Aus der DE 10 2009 009 767 A1, von welcher die vorliegende Erfindung ausgeht, ist darüber hinaus ein Mähdrescher mit einem Fahrerassistenzsystem bekannt, welches Fahrerassistenzsystem verschiedene Größen (z.B. Drehzahl, Korbweite, Kornverluste) an dem Mähdrescher misst und sie daraufhin überprüft, ob sie in einen kritischen Wertebereich gelangen bzw. kritische Grenzwerte über- oder unterschreiten. Falls diese Situation eintritt, kommuniziert das Fahrerassistenzsystem interaktiv mit dem Fahrer, indem dem Fahrer Maßnahmen bei der Ansteuerung des Dreschwerks vorgeschlagen werden, die aus dem kritischen Wertebereich hinausführen sollen. Diese Vorschläge kann der Fahrer dann akzeptieren oder verwerfen, wobei in einem nächsten Schritt ggf. dem Fahrer alternative Vorschläge gemacht werden oder die vorgeschlagenen Maßnahmen von dem Fahrer durch eine Eingabe genauer spezifiziert werden können.

EP2687924 A2 betrifft eine selbstfahrende landwirtschaftliche Arbeitsmaschine mit Arbeitsorganen, deren Arbeitsparameter durch zumindest eine Steuer- und Regeleinrichtung automatisiert einstellbar sind.

EP2837279 A2 betrifft ein Fahrerassistenzsystem für einen Mähdrescher.

Nachteilig an diesem Stand der Technik ist, dass trotz Unterstützung durch das Fahrerassistenzsystem der Fahrer für die fortlaufende Regelung des Dreschwerks regelmäßig mehrere und dabei recht spezifische Vorgaben machen muss. Teilweise wird der Fahrer dann einige Zeit nach dem Vornehmen einer solchen Einstellungsänderung durch das Fahrerassistenzsystem auch nach dem Eintritt einer Wirkung der vorgenommenen Veränderung abgefragt. Insgesamt erfolgt die Entlastung des Fahrers von einer manuellen Einstellung also nur in beschränktem Umfang und der Fahrer wird somit immer noch recht stark in seiner Aufmerksamkeit beansprucht. Hinzu kommt, dass das Erreichen gewünschter Qualitätskriterien auch voraussetzt, dass die aktuell erforderlichen Maßnahmen dem Fahrer bekannt sind und er das landwirtschaftliche Fachwissen hat, um dem Fahrerassistenzsystem die zielführenden Vorgaben zu machen.

Ausgehend von diesem Stand der Technik besteht die Aufgabe der Erfindung darin, den aus dem Stand der Technik bekannten Mähdrescher mit Fahrerassistenzsystem so weiterzuentwickeln und zu verbessern, dass eine umfassende und vorteilhafte Regelung des Dreschwerks bei geringerer Beanspruchung des Fahrers möglich ist.

Das obige Problem wird bei einem Mähdrescher mit den Merkmalen des Oberbegriffs von Anspruch 1 durch die Merkmale des kennzeichnenden Teils von Anspruch 1 gelöst.

Wesentlich für die Erfindung ist, dass das Dreschwerk zusammen mit dem Fahrerassistenzsystem einen Dreschautomaten bildet. Dies bedeutet, dass das Fahrerassistenzsystem mit seinem Speicher zum Hinterlegen von Daten und seiner Rechenvorrichtung dazu eingerichtet ist, einzelne Maschinenparameter des Dreschwerks autonom zu ermitteln und dem Dreschwerk vorzugeben. Solche Maschinenparameter werden vorliegend als "Dreschwerksparameter" bezeichnet. Die Basis für die Ermittlung der Dreschwerksparameter bildet eine benutzerseitige Auswahl von Ernteprozeßstrategien, die in dem Speicher des Fahrerassistenzsystems abgelegt sind.

Mit der vorschlagsgemäßen Lösung kann durch eine einmalige Auswahl der aktiven Ernteprozeßstrategie durch den Fahrer eine Art und Weise der Ansteuerung des Dreschwerks vorgegeben werden. Für die Ermittlung der Dreschwerksparameter im engeren Sinne ist eine weitere Eingabe vom Fahrer nicht erforderlich. Der Fahrer hat aber die Möglichkeit, die gewählte Ernteprozeßstrategie auf Wunsch zu ändern, so dass daraufhin weiter eine autonome Ansteuerung stattfindet, jedoch dann ggf. mit einer anderen Priorisierung.

Laut Erfindung ist in dem Speicher des Fahrerassistenzsystems ein funktionales Systemmodell für zumindest einen Teil des Mähdreschers hinterlegt, das die Basis für die autonome Ermittlung des mindestens einen Dreschwerksparameters bildet. Der Begriff "funktionales Systemmodell" bedeutet, dass zumindest ein Teil der funktionalen Zusammenhänge innerhalb des Mähdreschers von dem Systemmodell abgebildet werden. Beispiele hierfür werden weiter unten gegeben.

Laut Erfindung ist es so, dass die Rechenvorrichtung das Systemmodell im laufenden Erntebetrieb auf den aktuellen Ernteprozesszustand abgleicht. Die Überlegung besteht hier darin, das der autonomen Ermittlung der Dreschwerksparameter zugrundeliegende Systemmodell insbesondere zyklisch auf die tatsächlichen Gegebenheiten anzupassen.

Die zyklische Ermittlung von Dreschwerksparametern während des Erntebetriebs ist Teil der Erfindung Der Begriff "zyklisch" ist dabei weit zu verstehen und bedeutet hier eine fortlaufende Ermittlung mit konstanter, aber auch mit sich verändernder Zykluszeit. Eine solche zyklische Ermittlung des mindestens einen Dreschwerksparameters führt zu einer guten Reaktionszeit des Mähdreschers auf Änderungen im Ernteprozesszustand. Entsprechend ist es in diesem Zusammenhang vorteilhaft, auch das Systemmodell, zyklisch auf den aktuellen Ernteprozesszustand abzugleichen. Die Zykluszeiten sind hinreichend kurz einzustellen, um eine oben angesprochene, vorteilhafte Reaktionszeit zu erzielen.

Vorzugsweise gleicht die Rechenvorrichtung das Systemmodell in einem rekursiven Verfahren auf den jeweils aktuellen Ernteprozesszustand ab, so dass sich das Systemmodell schrittweise an die tatsächlichen Gegebenheiten annähert.

Unter dem Ernteprozesszustand sind alle Zustandsgrößen zusammengefasst, die in irgendeiner Weise mit dem Ernteprozess im Zusammenhang stehen. Dazu gehören Feldbestandsinformationen und/oder Ernteprozessparameter und/oder Dreschwerksparameter und/oder Umgebungsinformationen

Bei der besonders bevorzugten Ausgestaltung ist eine Sensoranordnung zur Erfassung zumindest eines Teils des Ernteprozesszustands vorgesehen. Damit lässt sich insbesondere der oben angesprochene, zyklische Abgleich des Systemmodells besonders einfach umsetzen.

Bei den weiter bevorzugten Ausgestaltungen lässt sich zumindest ein Teil des Ernteprozesszustands über eine Ein-/Ausgabevorrichtung eingeben. Damit lassen sich Sensorinformationen verifizieren oder sensorisch schwer erfassbare Zustandsgrößen ermitteln.

Bei der weiter bevorzugten Ausgestaltung ist in dem Speicher des Fahrerassistenzsystems mindestens ein Initialmodell hinterlegt, das insbesondere bei dem oben angesprochenen, fortlaufenden Abgleich des Systemmodels als Anfangswert dienen kann. Bei geeigneter Auswahl des Initialmodells lässt sich das Systemmodell in nur wenigen Abgleichzyklen auf eine gute Übereinstimmung mit den tatsächlichen Gegebenheiten bringen.

Zur Abbildung der funktionalen Zusammenhänge mittels des Systemmodells ist es erfindungsgemäß vorgesehen, dass mindestens einem Ernteprozessparameter mindestens ein Kennlinienfeld zugeordnet ist, wobei der Ernteprozessparameter die Ausgangsgröße des jeweiligen Kennlinienfeldes ist. Mittels eines obigen Kennlinienfeldes lassen sich auch komplexe funktionale Zusammenhänge mit geringem rechnerischen Aufwand abbilden. Insbesondere lässt sich der oben angesprochene, insbesondere rekursive Abgleich des Systemmodells mit vergleichsweise geringem Rechenaufwand umsetzen.

Ein obiges Kennlinienfeld bildet hier und vorzugsweise ganz allgemein die Abhängigkeit einer Ausgangsgröße von mindestens einer Eingangsgröße, insbesondere von zwei oder mehreren Eingangsgrößen, ab.

Weiterhin ist eine erfindungsgemäße Strukturierung des mindestens einen Kennlinienfelds vorgesehen, die der Tatsache Rechnung trägt, dass die Dreschwerksparameter "Trommeldrehzahl" und "Korbweite" von besonderer Bedeutung für die Umsetzung der obigen Ernteprozeßstrategien sind.

Im Sinne des oben angesprochenen Abgleichs des Systemmodells mit dem tatsächlichen Ernteprozesszustand ist es vorgesehen, dass die Rechenvorrichtung das mindestens eine Kennlinienfeld im laufenden Erntebetrieb, vorzugsweise zyklisch, auf den tatsächlichen Ernteprozesszustand abgleicht. Für die Umsetzung eines solchen Abgleichs ist es vorzugsweise vorgesehen, dass mehrere Punkte innerhalb des Kennlinienfeldes mittels einer Sensoranordnung nachgemessen werden. Eine Abweichung der gemessenen Punkte von den dazugehörigen Punkten des Systemmodells führt zu einer entsprechenden Anpassung des mindestens einen Kennlinienfeldes.

Für die Umsetzung der jeweils ausgewählten Ernteprozeßstrategie auf der Basis des Systemmodells ist vorgesehen, mindestens eine Umsetzungsvorschrift in dem Speicher zu hinterlegen. Ein Beispiel für eine solche Umsetzungsvorschrift ist die Ermittlung des mindestens einen Dreschwerksparameters in einem reinen Steuervorgang. Im einfachsten Fall arbeitet die Rechenvorrichtung zur Ermittlung des mindestens einen Dreschwerksparameters als Kennfeldsteuerung basierend auf dem oben angesprochenen, mindestens einen Kennlinienfeld. Im Zuge der Ermittlung des mindestens einen Dreschwerksparameters kann auf aufwändige Regelungsprozesse mit entsprechend regelungstechnischer Rückkopplung verzichtet werden.

Eine weitere bevorzugt zur Anwendung kommende Umsetzungsvorschrift besteht darin, dass zur gleichzeitigen Umsetzung von miteinander konkurrierenden Ernteprozeßstrategien eine Mehrzieloptimierung zur Anwendung kommt.

Schließlich besteht eine weiter bevorzugte Umsetzungsvorschrift in der Definition von Prämissen, auf deren Basis die Rechenvorrichtung eine Priorisierung zwischen verschiedenen Aspekten vornimmt. Speziell im Rahmen der Mehrzieloptimierung ermöglicht die Definition von Prämissen eine effektive Ermittlung von Dreschwerksparametern. Weitere abhängige Ansprüche betreffen eine bevorzugte Auswahl solcher Prämissen.

Weitere bevorzugte Umsetzungsvorschriften betreffend die Einstellung oder Optimierung einzelner, bevorzugter Ernteprozessparameter sind Gegenstand der Ansprüche

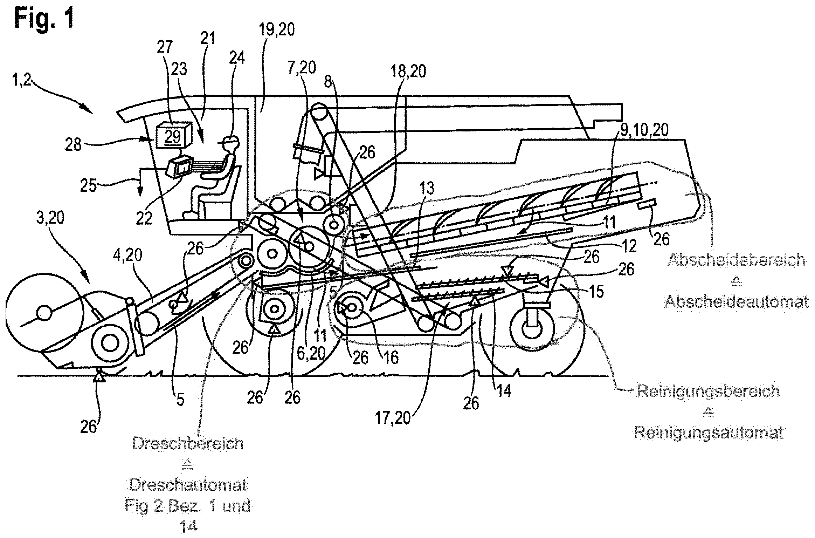

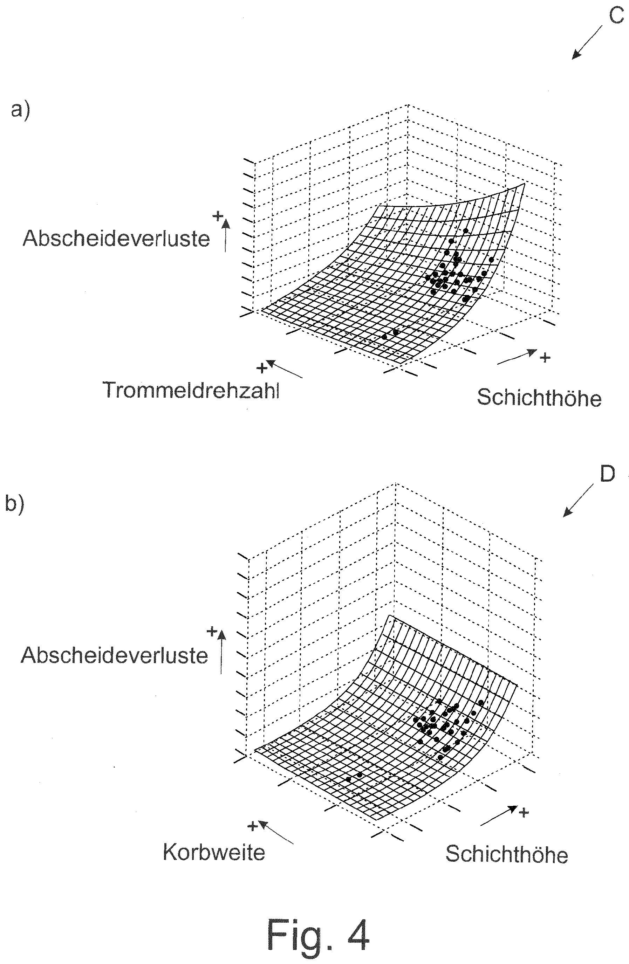

Weitere Einzelheiten, Merkmale, Ziele und Vorteile der vorliegenden Erfindung werden nachfolgend anhand der Zeichnung eines bevorzugten Ausführungsbeispiels näher erläutert, wobei die Figuren 1 bis 3 die erfindungsgemäßen Ausführungsformen und die Figuren 4 bis 7 nicht beanspruchte Ausführungsformen zeigen.. In der Zeichnung zeigt
- Fig. 1
- eine Seitenansicht eines vorschlagsgemäßen Mähdreschers,
- Fig. 2
- eine schematische Darstellung eines Fahrerassistenzsystems eines vorschlagsgemäßen Mähdreschers
- Fig. 3
- zwei Kennlinienfelder mit der Ausgangsgröße "Ausdruschverluste" und mit den Eingangsgrößen a) "Schichthöhe" und "Trommeldrehzahl" und b) "Schichthöhe" und "Korbweite",
- Fig. 4
- zwei Kennlinienfelder mit der Ausgangsgröße "Abscheideverluste" und mit den Eingangsgrößen a) "Schichthöhe" und "Trommeldrehzahl" und b) "Schichthöhe" und "Korbweite",
- Fig. 5
- zwei Kennlinienfelder mit der Ausgangsgröße "Schlupf-Dreschwerk-Antrieb" und mit den Eingangsgrößen a) "Schichthöhe" und "Trommeldrehzahl" und b) "Schichthöhe" und "Korbweite"
- Fig. 6
- zwei Kennlinienfelder mit der Ausgangsgröße "Bruchkornanteile" und mit den Eingangsgrößen a) "Schichthöhe" und "Trommeldrehzahl" und b) "Schichthöhe" und "Korbweite",
- Fig. 7
- zwei Kennlinienfelder mit der Ausgangsgröße "Reinigungsverluste" und mit den Eingangsgrößen a) "Schichthöhe" und "Trommeldrehzahl" und b) "Schichthöhe" und "Korbweite".

Ein vorschlagsgemäßer Mähdrescher weist ein Dreschwerk 1 zum Dreschen von aufgenommenem Erntegut zu Korngut auf. Unter dem Erntegut ist dabei das gesamte vom Feldbestand aufgenommene und dem Dreschwerk 1 zugeführte Material zu verstehen, wobei das Korngut dann die von dem Mähdrescher aus dem Erntegutzu gewinnenden Körner bezeichnet. Wie in Fig. 1 zu erkennen ist, wird ein Feldbestand durch ein Schneidwerk 2 des Mähdreschers abgemäht und das somit gewonnene Erntegut durch einen Schrägförderer 3 dem Dreschwerk 1 zugeführt.

Das Dreschwerk 1 ist mit einer Dreschtrommel 4 ausgestattet, die mit einem Dreschkorb 5 zusammenwirkt. Dem Dreschwerk 1 ist eine Abscheideanordnung 6 prozesstechnisch nachgelagert. Der dem Dreschwerk 1 zugeführte Erntegutstrom wird also im Anschluss - ohne das bereits hier gewonnene Korngut - der Abscheideanordnung 6 zugeführt.

Grundsätzlich dient das Dreschwerk 1 zum Ausreiben des überwiegenden Teils des Kornguts aus dem Stroh des Ernteguts durch den Dreschvorgang. In der Abscheideanordnung 6 wird dann das Erntegut mit dem in ihm verbliebenen Kornanteil so bewegt, z. B. geschüttelt, dass auch das verbliebene Korngut möglichst aus dem Stroh und dem sonstigen Erntegut herausgetrennt wird. Das im Dreschwerk 1 und der Abscheideanordnung 6 gewonnene Korngut wird dann einer Reinigungsanordnung 7 zugeführt. In der Reinigungsanordnung 7, welche regelmäßig mehrstufig ist, werden dann noch bis hierher im Korngut mitgeführte Nichtkornbestandteile, z.B. Spreu und Strohteile, sowie unausgedroschenes Material, wie etwa Ährenspitzen oder Grannen, von dem Korngut getrennt. Anschließend gelangt das gereinigte Korngut über eine Transportanordnung 9, z.B. einem Kornelevator, in einen Korntank 9a. Das ausgedroschene Stroh - also das verbliebene Erntegut in der Abscheideanordnung 6 - wird von dem Mähdrescher abgelegt, z. B. als Schwad entlang der Fahrspur.

Ein obiges Dreschwerk 1 kann durch die Vorgabe verschiedener Maschinenparameter angesteuert werden. Hierunter fallen in Abhängigkeit vom Aufbau des Dreschwerks 1 Antriebsparameter wie beispielsweise eine Trommeldrehzahl 1a oder sonstige Bewegungskennzahlen der Dreschtrommel 4 sowie eine Korbweite 1b - also der Abstand zwischen der Dreschtrommel 4 und einem Dreschkorb 5. Sofern das Dreschwerk 1 Entgrannerklappen aufweist, können auch diese im Rahmen der Ansteuerung des Dreschwerks 1 verstellt werden.

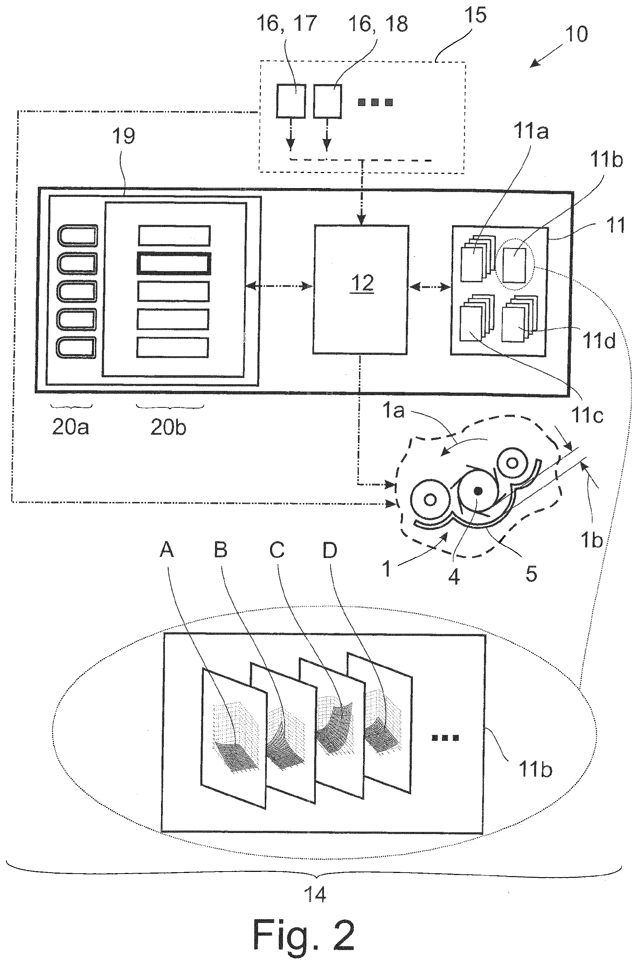

Der vorschlagsgemäße Mähdrescher weist ferner ein Fahrerassistenzsystem 10 zur Ansteuerung des Dreschwerks 1 auf. Dieses Fahrerassistenzsystem 10 umfasst einen Speicher 11 zum Hinterlegen von Daten - also einen Speicher im informationstechnischen Sinne - und eine Rechenvorrichtung 12 zur Verarbeitung der in dem Speicher 11 hinterlegten Daten. Grundsätzlich ist das Fahrerassistenzsystem dazu eingerichtet, einen Fahrer 13 des Mähdreschers bei der Bedienung des Mähdreschers zu unterstützen. Das Fahrerassistenzsystem 10 mit dem Speicher 11 und der Rechenvorrichtung 12 ist schematisch in Fig. 2 gezeigt.

Wesentlich ist nun, dass das Dreschwerk 1 zusammen mit dem Fahrerassistenzsystem 10 einen Dreschautomaten 14 bildet. Dies ist vorschlagsgemäß dadurch realisiert, dass im Speicher 11 eine Mehrzahl auswählbarer Ernteprozeßstrategien 11a hinterlegt sind und dass die Rechenvorrichtung 12 dazu eingerichtet ist, zur Umsetzung der ausgewählten Ernteprozeßstrategie 11a bzw. der Ernteprozeßstrategien 11a mindestens einen Maschinenparameter für das Dreschwerk 1 autonom zu ermitteln und dem Dreschwerk 1 vorzugeben. Solche Maschinenparameter für das Dreschwerk 1 werden vorliegend als "Dreschwerksparameter" bezeichnet. Auf diese Weise wird ein Dreschwerkautomat 14 bereitgestellt, welcher alle für die Arbeit des Dreschwerks 1 relevanten Grö-ßen umfassend untereinander koordiniert regelt. Es wird also insbesondere vermieden, dass von unterschiedlicher Seite konkurrierende und sich gegebenenfalls gegenseitig aushebelnde Ansteuerungen erfolgen. Vielmehr erfolgt die Ansteuerung aller relevanten Parameter "aus einer Hand". Ebenso kann der Fahrer 13 ein gewünschtes qualitatives Ergebnis vorgeben und braucht kein eigenes Expertenwissen zu den für dieses Ergebnis erforderlichen detaillierten Einzelheiten.

Es handelt sich bei der Ermittlung der Dreschwerksparameter um eine autonome Ermittlung insoweit, dass prinzipiell die Ernteprozeßstrategie 11a durch die Rechenvorrichtung 12 umgesetzt wird, ohne dass bei der Ermittlung der Dreschwerksparameter 1a, 1b im engeren Sinne ein Eingreifen des Fahrers 13 oder eine Rückfrage an den Fahrer 13 nötig ist. Ein solches Eingreifen des Fahrers 13 ist demnach weiterhin prinzipiell möglich, aber nicht erforderlich. Dabei unterscheiden sich die hinterlegten Ernteprozeßstrategien 11a in der Zielvorgabe der Einstellung oder der Optimierung von Ernteprozessparametern, wie noch erläutert wird.

Es darf darauf hingewiesen werden, dass das Fahrerassistenzsystem 10 grundsätzlich zentral ausgestaltetsein kann. Es dient insoweit der Ansteuerung nicht nur des Dreschwerks 1, sondern auch vor- und nachgelagerter Arbeitsorgane, wie des Schneidwerks 2, des Schrägförderers 3, der Abscheideanordnung 6, der Reinigungsanordnung 7 sowie der Verteilanordnung 8. Grundsätzlich ist es aber denkbar, dass das Fahrerassistenzsystem 10 dezentral strukturiert ist und aus einer Anzahl einzelner Steuersysteme zusammengesetzt ist. Dann kann es beispielsweise vorgesehen sein, dass zumindest ein Teil der Arbeitsorgane des Mähdreschers jeweils ein zugeordnetes, dezentrales Steuersystem aufweisen.

In dem Speicher 11 des Fahrerassistenzsystems 10 ist ein funktionales Systemmodell 11b für zumindest einen Teil des Mähdreschers hinterlegt, wobei die Rechenvorrichtung 12 die oben angesprochene, autonome Ermittlung des mindestens einen Dreschwerksparameters 1a, 1b basierend auf dem Systemmodell 11b vornimmt.

Bei dem funktionalen Systemmodell 11b handelt es sich um ein rechnerisches Modell zur Abbildung funktionaler Zusammenhänge innerhalb des Mähdreschers. Beispiele für solche funktionalen Zusammenhänge werden weiter unten erläutert.

Das Systemmodell 11b wird von der Rechenvorrichtung 12 vorzugsweise im laufenden Erntebetrieb auf den aktuellen Ernteprozesszustand abgeglichen. Dies bedeutet, dass die Rechenvorrichtung 12 überprüft, ob die in dem Systemmodell 11b abgebildeten funktionalen Zusammenhänge mit dem tatsächlichen Ernteprozesszustand übereinstimmen. Sofern sich bei dieser Überprüfung Abweichungen ergeben, nimmt die Rechenvorrichtung 12 eine entsprechende Änderung des Systemmodells 11b vor. Dieser Abgleich erfolgt in besonders bevorzugter Ausgestaltung zyklisch, wobei im Hinblick auf das weite Verständnis des Begriffs "zyklisch" auf den allgemeinen Teil der Beschreibung verwiesen werden darf.

In einer bevorzugten Ausgestaltung gleicht die Rechenvorrichtung 12 das Systemmodell 11b in einem rekursiven Verfahren auf den tatsächlichen Ernteprozesszustand ab und legt das Systemmodell 11b in dem Speicher 11 ab. Dies wird dadurch bewerkstelligt, dass das vor dem Abgleich im Speicher 11 abgelegte Systemmodell 11b bei dem Abgleich berücksichtigt wird. So ist ein schrittweiser Abgleich des Systemmodells 11b vorgesehen.

Im Sinne kurzer Reaktionszeiten des Mähdreschers auf sich verändernde Ernteprozesszustände ist es vorzugsweise vorgesehen, dass die Rechenvorrichtung 12 die Dreschwerksparameter in obigem Sinne zyklisch ermittelt. Auch in diesem Zusammenhang darf auf das weite Verständnis des Begriffs "zyklisch" verwiesen werden.

Wie weiter oben erläutert, umfasst der Begriff "Ernteprozesszustand" alle den Ernteprozess betreffenden Informationen. Dazu gehören Feldbestandsinformationen wie "Bestandsdichte", "Dreschbarkeit des Bestands" und "Bestandsfeuchte". Ferner gehören dazu der Ernteprozessparameter "Ausdruschverluste" als ein Maß für die nicht ausgedroschenen, auf dem Feld abgelegten Körner, der Ernteprozessparameter "Bruchkornanteile" als ein Maß für die gebrochenen, im Korntank abgelegten Körner, der Ernteprozeßparameter "Schichthöhe" als ein Maß für den Durchsatz, der Ernteprozeßparameter "Abscheideverluste" als Maß für die von der Abscheideanordnung 6 auf dem Feld abgelegten Körner, der Ernteprozeßparameter "Reinigungsverluste" als Maß für die von der Reinigungsanordnung 7 auf dem Feld abgelegten Körner, der Ernteprozeßparameter "Schlupf-Dreschwerk-Antrieb" als ein Maß für Dreschwerksbelastung und den Ernteprozeßparameter "Kraftstoffverbrauch" als ein Maß für den Energieverbrauch des Dreschwerksantriebs. Schließlich gehören dazu Dreschwerksparameter wie "Trommeldrehzahl" und "Korbweite" sowie Umgebungsinformationen wie "Umgebungstemperatur" und "Umgebungsfeuchte". All diese dem Ernteprozesszustand zuzurechnenden Informationen lassen sich auf unterschiedliche Art und Weise ermitteln.

Hinsichtlich des Begriffs "Schichthöhe" darf darauf hingewiesen werden, dass dieser Begriff weit auszulegen ist und sowohl die Schichthöhe des vom Dreschwerk aufgenommenen Gutstroms im engeren Sinne als auch den Durchsatz des durch das Dreschwerk 1 durchlaufenden Gutstroms umfasst. Insoweit gelten alle Ausführungen zu der Schichthöhe gleichermaßen für den Durchsatz. Insbesondere kann der Begriff "Schichthöhe" vorliegend durch den Begriff "Durchsatz" ersetzt werden.

In einer bevorzugten Ausgestaltung ist eine Sensoranordnung 15 zur Erfassung zumindest eines Teils des Ernteprozesszustands vorgesehen. Vorzugsweise ist die Sensoranordnung 15 mit mehreren Sensoren 16 ausgestattet. Beispielsweise weist die Sensoranordnung 15 einen Korngutsensor 17 zur Erfassung einer Korngutinformation auf. Der Korngutsensor 17 kann dabei - gemäß der Darstellung der Fig. 1 - als Kornkameraanordnung ausgestaltet sein. Der Korngutsensor 17 kann insbesondere zur Erfassung eines oben angesprochenen Bruchkornanteils, eines Nichtkornanteils, eines Grannenkornanteils und/oder eines Ährenspitzenanteils eingerichtet sein. Hierzu kann der, potentiell mehrteilige, Korngutsensor 17 zur Erfassung der Korngutinformation in dem Korntank 9a und/oder in der Transportanordnung 9 des Mähdreschers eingerichtet sein.

Alternativ oder zusätzlich kann die Sensoranordnung 15 - wie ebenfalls in der Fig. 1 dargestellt - einen Schwadsensor 18 zur Erfassung einer Schwadinformation aufweisen. Ein Schwadsensor 18 lässt sich bei geeigneter Auslegung zur Erfassung eines Kornanteils im Schwad nutzen. Ein solcher Kornanteil stellt entsprechend einen Verlust an Korngut dar.

Alternativ zu der Erfassung des Ernteprozesszustands mittels einer Sensoranordnung 15 kann es auch vorgesehen sein, dass eine Ein-/Ausgabevorrichtung 19 dem Fahrerassistenzsystem 10 zugeordnet ist, wobei zumindest ein Teil des Ernteprozesszustands über die Ein-/Ausgabevorrichtung 19 eingebbar ist. Dabei ist es vorzugsweise so, dass die Rechenvorrichtung 12 Abfragen betreffend den aktuellen Ernteprozesszustand erzeugt und über die Ein-/Ausgabevorrichtung 19 ausgibt. Auf eine solche Abfrage hin kann der Fahrer 13 zumindest einen Teil des Ernteprozesszustands über die Ein-/Ausgabevorrichtung eingeben. Hierfür weist die Ein-/Ausgabevorrichtung 19 entsprechende Eingabeelemente 20a und Ausgabeelemente 20b auf.

Eine obige Abfrage besteht vorzugsweise darin, ob die Dreschbarkeit des Feldbestands "leicht zu dreschen", "normal zu dreschen" oder "schwer zu dreschen" ist. Im einfachsten Falle wird dem Fahrer 13 eine Auswahl aus vorbestimmten Antworten bereitgestellt.

Wie oben erläutert, wird das Systemmodell 11b vorzugsweise zyklisch auf den tatsächlichen Ernteprozesszustand abgeglichen. Als Anfangswert für das Systemmodell 11b ist in dem Speicher 11 mindestens ein Initialmodell 11c hinterlegt, wobei bei der ersten Ermittlung des mindestens einen Dreschwerksparameters die Rechenvorrichtung 12 die Ermittlung basierend auf dem Initialmodell 11c vornimmt. Die Formulierung "erste Ermittlung" steht für die Situation insbesondere zu Beginn des Erntebetriebs, in der ein Abgleich des Systemmodells 11b noch nicht vorgenommen worden ist.

In besonders bevorzugter Ausgestaltung sind in dem Speicher 11 mindestens zwei Initialmodelle 11c hinterlegt, wobei die Rechenvorrichtung 12 in Abhängigkeit von dem jeweiligen Ernteprozesszustand ein Initialmodell 11c auswählt, auf dem die anschließende Ermittlung der Dreschwerksparameter zunächst basiert.

Die in Rede stehenden, vom Fahrer 13 auswählbaren Ernteprozeßstrategien 11a sind jeweils auf verschiedene Zielvorgaben gerichtet. In einer ersten Variante ist mindestens eine Ernteprozeßstrategie 11a auf die Zielvorgabe der Einstellung oder der Optimierung mindestens eines Ernteprozessparameters wie "Ausdruschverluste", "Bruchkornanteil", "Abscheideverluste", "Reinigungsverluste", "Schlupf-Dreschwerk-Antrieb", "Kraftstoffverbrauch" o. dgl. gerichtet. Die Umsetzung der Ernteprozeßstrategien 11a soll dabei jeweils durch eine entsprechende Vorgabe von Dreschwerksparametern, hier und vorzugsweise der für die Ansteuerung des Dreschwerks 1 im Vordergrund stehenden Dreschwerksparameter "Trommeldrehzahl" und "Korbweite", erfolgen.

Das Systemmodell 11b bildet erfindungsgemäß zumindest einen Teil der funktionalen Zusammenhänge zwischen einem Ernteprozessparameter und mindestens einem weiteren Parameter, mindestens einem Dreschwerksparameter wie "Trommeldrehzahl" und "Korbweite" und mindestens einem weiteren Ernteprozessparameter wie die den Durchsatz repräsentierende "Schichthöhe" ab.

Zur Abbildung der funktionalen Zusammenhänge ist mindestens einem Ernteprozessparameter mindestens ein Kennlinienfeld A-J zugeordnet, wobei dieser Ernteprozessparameter hier als Ausgangsgröße des mindestens einen Kennlinienfeldes A-J definiert ist.

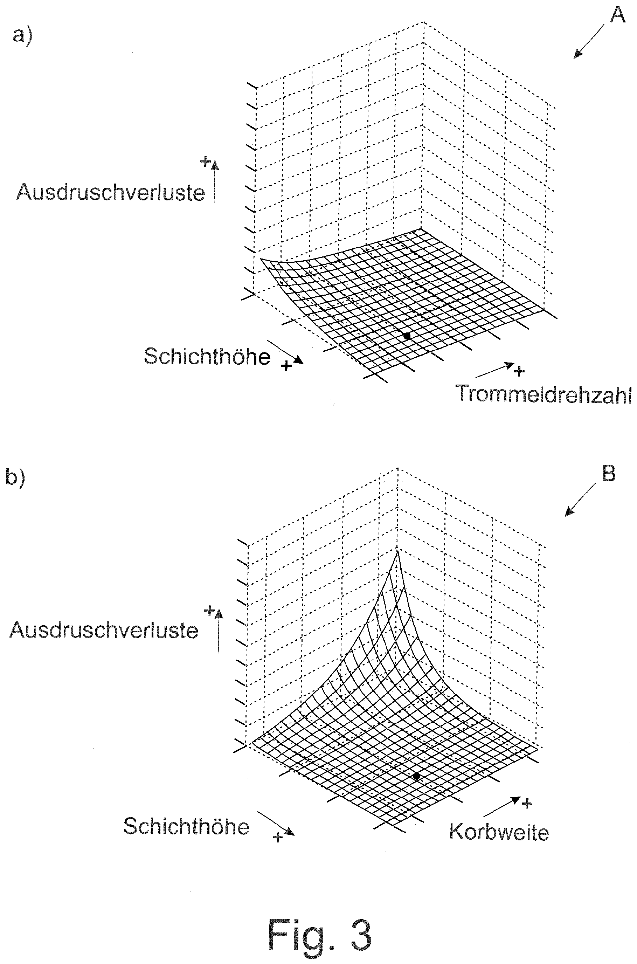

In erfindungsgemäßer Ausgestaltung und in den Fig. 3 bis 7 dargestellt ist es so, dass der Ernteprozessparameter "Schichthöhe" und ein Dreschwerksparameter, der Dreschwerksparameter "Trommeldrehzahl" oder der Dreschwerksparameter "Korbweite", als Eingangsgrößen für das mindestens eine Kennlinienfeld A-J definiert sind.

Zur Abbildung der funktionalen Zusammenhänge zwischen einem Ernteprozeßparameter als Ausgangsgröße und verschiedenen Eingangsgrößen sind diesem Ernteprozeßparameter ein erstes Kennlinienfeld und ein zweites Kennlinienfeld zugeordnet. Dabei bilden für das erste Kennlinienfeld A,C,E,G,I der weitere Ernteprozessparameter "Schichthöhe" und der Dreschwerksparameter "Trommeldrehzahl" die Eingangsgrößen (Abbildung a) in den Fig. 3 bis 7), während für das zweite Kennlinienfeld B,D,F,H,J der weitere Ernteprozessparameter "Schichthöhe" und der Dreschwerksparameter "Korbweite" die Eingangsgrößen bilden (Abbildung b) in den Fig. 3 bis 7).

Fig. 3a) zeigt das Kennlinienfeld Azu dem funktionalen Zusammenhang zwischen der Ausgangsgröße "Ausdruschverluste" und den Eingangsgrößen "Schichthöhe" und "Trommeldrehzahl". Hieraus ergibt sich, dass der Ausdrusch umso besser ist, je höher die den Durchsatz repräsentierende Eingangsgröße Schichthöhe und je höher die Dreschtrommeldrehzahl.

Fig. 3b) zeigt das Kennlinienfeld B zu dem funktionalen Zusammenhang zwischen der Ausgangsgröße "Ausdruschverluste" und den Eingangsgrößen "Schichthöhe" und "Korbweite". Hieraus ergibtsich, dass der Ausdrusch umso besser ist, je höher die den Durchsatz repräsentierende Schichthöhe und je niedriger die Korbweite.

Fig. 4a) zeigt das Kennlinienfeld C zu dem funktionalen Zusammenhang zwischen der Ausgangsgröße "Abscheideverluste" und den Eingangsgrößen "Schichthöhe" und "Trommeldrehzahl". Hieraus ergibt sich, dass mit ansteigender den Durchsatz repräsentierender Schichthöhe und absinkender Dreschtrommeldrehzahl die Abscheideverluste zunehmen, bzw. die Abscheidung sinkt.

Fig. 4b) zeigt das Kennlinienfeld D zu dem funktionalen Zusammenhang zwischen der Ausgangsgröße "Abscheideverluste" und den Eingangsgrößen "Schichthöhe" und "Korbweite". Hieraus ergibt sich, dass mit ansteigender, den Durchsatz repräsentierender Schichthöhe und ansteigender Korbweite die Abscheideverluste zunehmen.

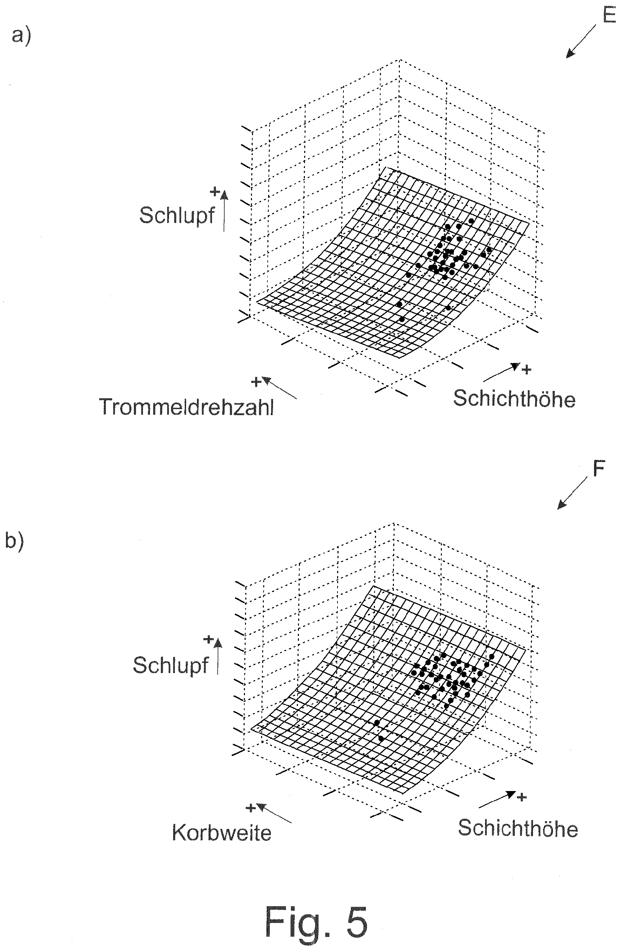

Fig. 5a) zeigt das Kennlinienfeld E zu dem funktionalen Zusammenhang zwischen der die Dreschwerksbelastung repräsentierende Ausgangsgröße "Schlupf-Dreschwerk-Antrieb" und den Eingangsgrößen "Schichthöhe" und "Trommeldrehzahl". Hieraus ergibt sich, dass mit ansteigender, den Durchsatz repräsentierender Schichthöhe und absinkender Trommeldrehzahl die Belastung des Dreschwerks, hier der Schlupf im Antriebsstrang des Dreschwerks, ansteigt.

Fig. 5b) zeigt das Kennlinienfeld F zu dem funktionalen Zusammenhang zwischen der Ausgangsgröße "Schlupf-Dreschwerk-Antrieb" und den Eingangsgrößen "Schichthöhe" und "Korbweite". Hieraus ergibt sich, dass mit ansteigender den Durchsatz repräsentierender Schichthöhe und absinkender Korbweite der Schlupf im Dreschwerk-Antrieb ansteigt.

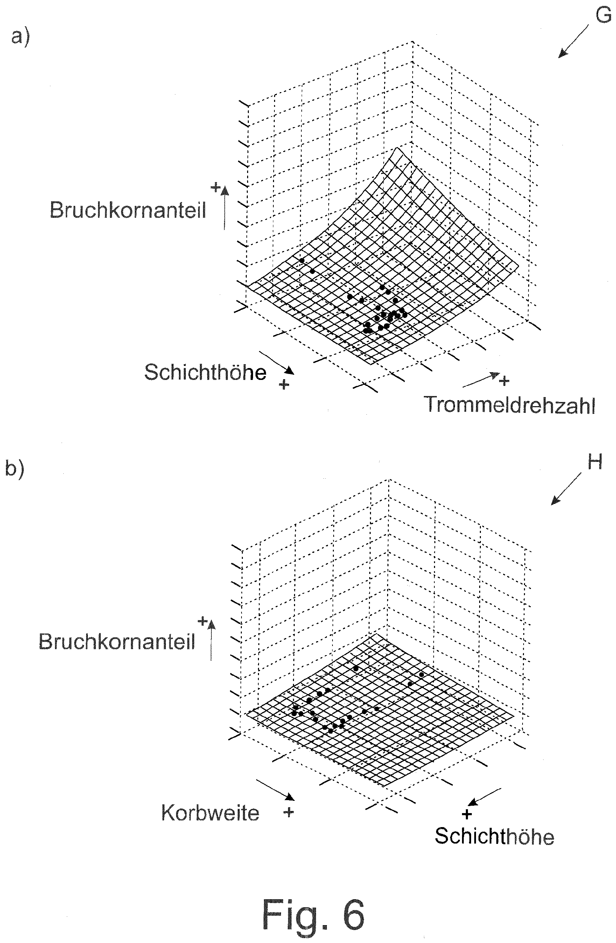

Fig. 6a) zeigt das Kennlinienfeld G zu dem funktionalen Zusammenhang zwischen der Ausgangsgröße "Bruchkornanteil" und den Eingangsgrößen "Schichthöhe" und "Trommeldrehzahl". Hieraus ergibt sich, dass mit ansteigender Trommeldrehzahl 1a und absinkender den Durchsatz repräsentierender Schichthöhe der Bruchkornanteil ansteigt.

Fig. 6b) zeigt das Kennlinienfeld H zu dem funktionalen Zusammenhang zwischen der Ausgangsgröße "Bruchkornanteil" und den Eingangsgrößen "Schichthöhe" und "Korbweite". Hieraus ergibt sich, dass mit absinkender, den Durchsatz repräsentierender Schichthöhe und absinkender Korbweite der Bruchkornanteil ansteigt.

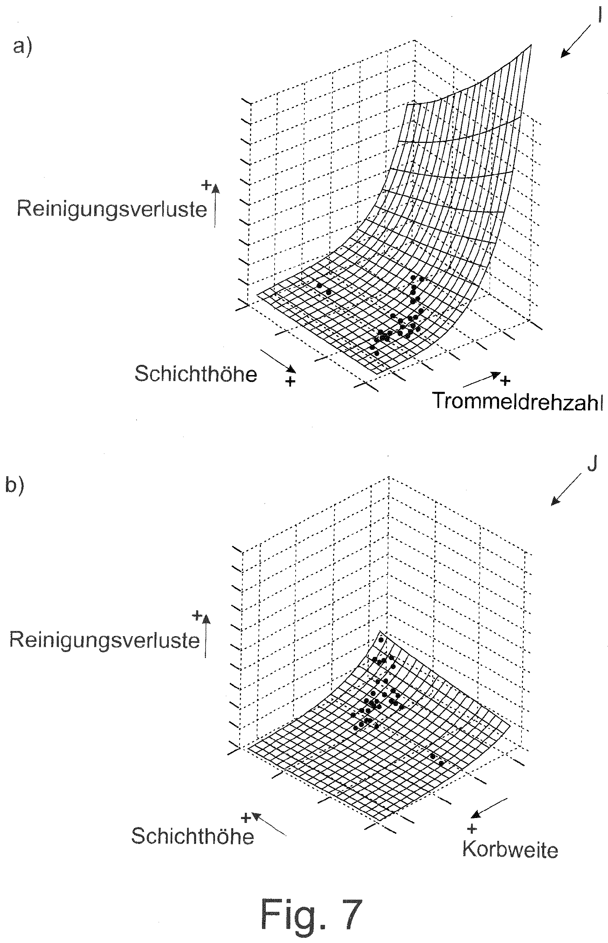

Fig. 7a) zeigt das Kennlinienfeld I zu dem funktionalen Zusammenhang zwischen der Ausgangsgröße "Reinigungsverluste" und den Eingangsgrößen "Schichthöhe" und "Trommeldrehzahl". Hieraus ergibt sich, dass mit ansteigender Trommeldrehzahl 1a und ansteigender, den Durchsatz repräsentierender Schichthöhe die Reinigungsverluste ansteigen.

Fig. 7b) zeigt das Kennlinienfeld J zu dem funktionalen Zusammenhang zwischen der Ausgangsgröße "Reinigungsverluste" und den Eingangsgrößen "Schichthöhe" und "Korbweite". Hieraus ergibt sich, dass mit abnehmender Korbweite 1b und ansteigender, den Durchsatz repräsentierender Schichthöhe die Reinigungsverluste ansteigen.

Bei den Darstellungen der Kennlinienfelder A-J in den Fig. 3 bis 7 ist zu berücksichtigen, dass die Skalierungen der Ausgangsgröße in den jeweiligen Abbildungen a) und b) identisch sind. Daraus ergibt sich, dass in Abhängigkeit von der jeweiligen Eingangsgröße eine Einstellung der Ausgangsgröße vornehmlich über die Trommeldrehzahl 1a oder vornehmlich über die Korbweite 1b vorgenommen werden kann. Ferner ergibt sich aus den Darstellungen der Kennlinienfelder A-J in den Fig. 3 bis 7, dass verschiedene Strategien der Einstellung oder Optimierung von Ausgangsgrößen miteinander konkurrieren können. Dies ist insbesondere für die weiter unten erläuterten Umsetzungsvorschriften von Bedeutung.

Grundsätzlich kann es vorgesehen sein, dass die Rechenvorrichtung 12 der Ermittlung des mindestens einen Ernteprozessparameters stets ein und dasselbe Kennlinienfeld A-J, ggf. mit einer auf den obigen Abgleich zurückgehenden Modifizierung, zugrunde legt. Vorzugsweise ist es jedoch so, dass die Rechenvorrichtung 12 mindestens ein Kennlinienfeld A-J in Abhängigkeit von dem aktuellen Ernteprozesszustand auswählt und der Ermittlung des mindestens einen Dreschwerksparameters zugrunde legt. Damit kann beispielsweise mit einer geeigneten Wahl des Kennlinienfelds A-J auf eine Änderung von Ernteprozeßzuständen, beispielsweise auf eine Änderung von einer Bestandsfeuchte o. dgl., reagiert werden.

Der oben erläuterte Abgleich des Systemmodells 11b auf den aktuellen Ernteprozeßzustand erfolgt für den Fall des Systemmodells 11b mit mindestens einem Kennlinienfeld A-J vorzugsweise dadurch, dass die Rechenvorrichtung 12 das mindestens eine Kennlinienfeld A-J im laufenden Erntebetrieb, insbesondere zyklisch, auf den Ernteprozesszustand abgleicht. Als Startwert ist in Anlehnung an das Initialmodell 11c in dem Speicher 11 mindestens ein Initialkennlinienfeld hinterlegt, wobei bei der ersten Ermittlung des mindestens einen Dreschwerksparameters die Rechenvorrichtung 12 entsprechend die Ermittlung des mindestens einen Dreschwerksparameters basierend auf dem Initialkennlinienfeld 11c vornimmt. In den Fig. 3 bis 7 sind jeweils eine Reihe von realen Sensormeßwerten zu dem jeweiligen Ernteprozeßzustand eingetragen. In dem obigen Abgleich nimmt die Rechenvorrichtung 12 eine Veränderung des jeweiligen Kennlinienfeldes A-J vor, um eine Annäherung des Kennlinienfeldes A-J an die realen Sensormeßwerte zu erreichen. Dabei kann beispielsweise das gesamte Kennlinienfeld A-J in Richtung der jeweiligen Ausgangsgröße, in den Fig. 3 bis 7 nach oben oder nach unten, verschoben werden. Besonders vorteilhaft ist allerdings, wenn die Annäherung des Kennlinienfeldes A-J so getroffen ist, dass sie auch eine Änderung der Verläufe der jeweiligen Kennlinien mit sich bringt.

Für die Umsetzung der Ernteprozeßstrategie 11a mittels der Rechenvorrichtung 12 ist in dem Speicher 11 mindestens eine Umsetzungsvorschrift 11d hinterlegt. Für die Umsetzungsvorschrift 11d sind verschiedene vorteilhafte Varianten denkbar. In einer ersten Variante ist es vorgesehen, dass eine Umsetzungsvorschrift 11d die Ermittlung des mindestens einen Dreschwerksparameters in einem Steuervorgang, und nicht in einem Regelungsvorgang, umsetzt. Dabei arbeitet die Rechenvorrichtung 12 zur Ermittlung des mindestens einen Dreschwerksparameters vorzugsweise als Kennfeldsteuerung. Eine regelungstechnische Rückkopplung ist bei der Ermittlung der Dreschwerksparameter also nicht vorgesehen. Die Reaktion der Rechenvorrichtung 12 auf Änderungen im Ernteprozeßzustand ergibt sich allein aus dem oben erläuterten Abgleich des Systemmodells 11b auf den jeweils aktuellen Ernteprozeßzustand. Dieses Grundprinzip der Ansteuerung des Dreschwerks 1 führt zu einer Vereinfachung der Ermittlung der Dreschwerksparameter durch den Wegfall der regelungstechnischen Rückkopplung. Dadurch ergibtsich die Möglichkeit, auch komplexe funktionale Zusammenhänge, insbesondere die im Folgenden zu erläuternden konkurrierenden Strategien, mit geringem rechnerischem und zeitlichem Aufwand umzusetzen.

Konkurrierende Strategien können sich beispielsweise dadurch ergeben, dass zumindest eine auswählbare Ernteprozeßstrategie 11a mindestens zwei Teilstrategien umfasst, die im Hinblick auf ein und denselben Dreschwerksparameter miteinander konkurrieren. Eine zweite Möglichkeit besteht in diesem Zusammenhang darin, dass mindestens zwei auswählbare Ernteprozeßstrategien als solche im Hinblick auf ein und denselben Dreschwerksparameter miteinander konkurrieren. Beispielsweise erfordert gemäß Fig. 3a) die Ernteprozeßstrategie der Optimierung der Ausdruschverluste regelmäßig ein Ansteigen der Trommeldrehzahl, während gemäß Fig. 6a) die Ernteprozeßstrategie der Optimierung des Bruchkornanteils ein Absenken der Trommeldrehzahl erfordert. Dabei wird davon ausgegangen, dass die Optimierung hier stets die weitestgehende Reduzierung der Ausdruschverluste und des Bruchkornanteils betrifft.

In den obigen Situationen umfasst eine Umsetzungsvorschrift 11d zur Umsetzung der miteinander konkurrierenden Strategien vorzugsweise eine Mehrzieloptimierung, bei der es sich beispielsweise um eine Pareto-Optimierung handeln kann. Eine solche Mehrzieloptimierung lässt sich besonders einfach auf der Basis des Systemmodells 11b, vorzugsweise auf der Basis der obigen Kennlinienfelder A-J und weiter vorzugsweise unter Anwendung der oben genannten Kennfeldsteuerung umsetzen.

Insbesondere bei der Umsetzung der miteinander konkurrierenden Strategien ist es vorzugsweise vorgesehen, dass eine Umsetzungsvorschrift 11d mindestens eine Prämisse umfasst, auf deren Basis die Rechenvorrichtung 12 bei der autonomen Ermittlung des mindestens einen Dreschwerksparameters eine Priorisierung zwischen ausgewählten Ernteprozeßstrategien 11a und/oder zwischen Teilstrategien einer ausgewählten Ernteprozeßstrategie 11a und/oder zwischen einzustellenden oder zu optimierenden Ernteprozessparametern und/oder zwischen vorzugebenden Dreschwerksparametern vornimmt.

Dabei besteht eine bevorzugte Prämisse beispielsweise darin, dass die Rechenvorrichtung 12 die Einstellung oder Optimierung des Bruchkornanteils stets vorgelagert zu der Einstellung oder Optimierung der Ausdruschverluste vornimmt. Alternativ oder zusätzlich besteht eine bevorzugte Prämisse beispielsweise darin, dass für die Einstellung oder Optimierung der Ausdruschverluste die Vorgabe der Korbweite 1b präferiert ist gegenüber der Vorgabe der Trommeldrehzahl 1a. Eine weitere Prämisse kann vorzugsweise darin bestehen, dass für die Einstellung oder Optimierung des Bruchkornanteils die Vorgabe der Trommeldrehzahl 1a präferiert ist gegenüber der Vorgabe der Korbweite 1b.

Es sind im Übrigen weitere Umsetzungsvorschriften 11d denkbar, die auf bestimmte, in der Praxis besonders bedeutsame Einzelfälle gerichtet sind. Erfindungsgemäß besteht für die Ernteprozeßstrategie 11a der Einstellung oder Optimierung des Ernteprozessparameters "Ausdruschverluste" eine Umsetzungsvorschrift darin, dass die Rechenvorrichtung 12 auf ein Absenken der Schichthöhe hin dem Dreschwerk 1 basierend auf dem Systemmodell 11b ein Ansteigen der Trommeldrehzahl 1a und/oder ein Absenken der Korbweite 1b vorgibt.

Schließlich ist es in diesem Zusammenhang denkbar, dass für die Ernteprozeßstrategie 11a der Einstellung oder Optimierung des Ernteprozessparameters "Abscheideverluste" eine Umsetzungsvorschrift 11d darin besteht, dass die Rechenvorrichtung 12 auf ein Ansteigen der Schichthöhe hin dem Dreschwerk 1 basierend auf dem Systemmodell 11b ein Ansteigen der Trommeldrehzahl 1a vorgibt.

### Bezugszeichenliste

1 Dreschwerk
1a Trommeldrehzahl
1b Korbweite 1b
2 Schneidwerk
3 Schrägförderer
4 Dreschtrommel
5 Dreschkorb
6 Abscheidevorrichtung
7 Reinigungsvorrichtung
8 Verteilanordnung
9 Transportanordnung
9a Korntank
10 Fahrerassistenzsystem
11 Speicher
11a Ernteprozeßstrategie
11b Systemmodell
11c Initialmodell
11d Umsetzungsvorschrift
12 Rechenvorrichtung
13 Fahrer
14 Dreschautomat
15 Sensoranordnung
16 Sensor
17 Korngutsensor
18 Schwadsensor
19 Ein-/Augabevorrichtung
20a Eingabeelemente
20b Ausgabeelemente
A-J Kennlinienfelder

## Patentansprüche

1. Mähdrescher mit einem Dreschwerk (1) zum Dreschen von aufgenommenem Erntegut zu Korngut und mit einem Fahrerassistenzsystem (10) zur Ansteuerung des Dreschwerks (1), wobei das Fahrerassistenzsystem (10) einen Speicher (11) zum Hinterlegen von Daten und eine Rechenvorrichtung (12) zur Verarbeitung der in dem Speicher (11) hinterlegten Daten umfasst,
**dadurch gekennzeichnet,**
**dass** das Dreschwerk (1) zusammen mit dem Fahrerassistenzsystem (10) einen Dreschautomaten (14) bildet, indem im Speicher (11) eine Mehrzahl auswählbarer Ernteprozeßstrategien (11a) hinterlegt sind und indem die Rechenvorrichtung (12) dazu eingerichtet ist, zur Umsetzung der jeweils ausgewählten Ernteprozeßstrategie (11a) mindestens einen Dreschwerksparameter (1a, 1b) autonom zu ermitteln und dem Dreschwerk (1) vorzugeben und wobei die Rechenvorrichtung (12) dazu eingerichtet ist, zur Umsetzung der jeweils ausgewählten Ernteprozeßstrategie (11b) mindestens einen Dreschwerksparameter (1a,1b) zyklisch zu ermitteln und dem Dreschwerk (1) vorzugeben, wobei
in dem Speicher (11) ein funktionales Systemmodell (11b) für zumindest einen Teil des Mähdreschers hinterlegt ist und dass die Rechenvorrichtung (12) dazu eingerichtet ist, die autonome Ermittlung des mindestens einen Dreschwerksparameters (1a,1b) basierend auf dem Systemmodell (11b) vorzunehmen, und dass die Rechenvorrichtung (12) das Systemmodell (11b) im laufenden Erntebetrieb zyklisch auf den aktuellen Ernteprozesszustand abgleicht, wobei das Systemmodell (11b) zumindest einen Teil der funktionalen Zusammenhänge zwischen einem Ernteprozessparameter wie "Ausdruschverluste", "Bruchkornanteil", "Abscheideverluste", "Reinigungsverluste", "Schlupf-Dreschwerk-Antrieb", "Kraftstoffverbrauch", mindestens einem weiteren Parameter, nämlich einem Dreschwerksparameter wie "Trommeldrehzahl", "Korbweite", und mindestens einem weiteren Ernteprozessparameter wie "Schichthöhe" abbildet, wobei zur Abbildung der funktionalen Zusammenhänge mindestens einem Ernteprozessparameter mindestens ein Kennlinienfeld (A-J) zugeordnet ist und dass dieser Ernteprozessparameter die Ausgangsgröße des mindestens einen Kennlinienfeldes (A-J) ist, wobei der Ernteprozessparameter "Schichthöhe" und ein Dreschwerksparameter, nämlich der Dreschwerksparameter "Trommeldrehzahl" oder der Dreschwerksparameter "Korbweite", die Eingangsgrößen für das mindestens eine Kennlinienfeld (A-J) sind, wobei für die Ernteprozeßstrategie der Einstellung oder Optimierung des Ernteprozessparameters "Ausdruschverluste" eine Umsetzungsvorschrift darin besteht, dass die Rechenvorrichtung auf ein Absenken der Schichthöhe in dem Dreschwerk basierend auf dem Systemmodell ein Ansteigen der Trommeldrehzahl (1a) und/oder ein Absenken der Korbweite (1b) vorgibt.

2. Mähdrescher nach einem der vorhergehenden Ansprüche, **dadurch gekennzeichnet, dass** der Ernteprozesszustand Feldbestandsinformationen wie "Bestandsdichte", "Dreschbarkeit", "Bestandsfeuchte" und/oder Ernteprozessparameter wie "Ausdruschverluste", "Bruchkornanteil", "Schichthöhe", "Abscheideverluste", "Reinigungsverluste", "Schlupf-Dreschwerk-Antrieb", "Kraftstoffverbrauch" und/oder Dreschwerksparameter wie "Trommeldrehzahl", "Korbweite" und/oder Umgebungsinformationen wie "Umgebungstemperatur", "Umgebungsfeuchte", umfasst.

3. Mähdrescher nach einem der vorhergehenden Ansprüche, **dadurch gekennzeichnet, dass** eine Sensoranordnung (15) zur Erfassung zumindest eines Teils des Ernteprozesszustands vorgesehen ist.

4. Mähdrescher nach einem der vorhergehenden Ansprüche, **dadurch gekennzeichnet, dass** eine Ein-/Ausgabevorrichtung (19) vorgesehen ist und dass zumindest ein Teil des Ernteprozesszustands über die Ein-/Ausgabevorrichtung (19) eingebbar ist.

5. Mähdrescher nach Anspruch 6, **dadurch gekennzeichnet, dass** die Rechenvorrichtung (12) Abfragen betreffend den aktuellen Ernteprozesszustand erzeugt und über die Ein-/Ausgabevorrichtung (19) ausgibt und dass auf eine Abfrage hin zumindest ein Teil des Ernteprozesszustands über die Ein-/Ausgabevorrichtung (19) eingebbar ist.

6. Mähdrescher nach einem der vorhergehenden Ansprüche, **dadurch gekennzeichnet, dass** in dem Speicher (11) mindestens ein Initialmodell (11c) hinterlegt ist und dass bei der ersten Ermittlung des mindestens einen Dreschwerksparameters die Rechenvorrichtung (12) die Ermittlung basierend auf dem Initialmodell (11c) vornimmt, vorzugsweise, dass in dem Speicher (11) mindestens zwei Initialmodelle (11c) hinterlegt sind und dass die Rechenvorrichtung (12) in Abhängigkeit vom Ernteprozesszustand ein Initialmodell (11c) auswählt, auf dem die anschließende Ermittlung der Dreschwerksparameter basiert.

7. Mähdrescher nach einem der vorhergehenden Ansprüche, dadurchgekennzeichnet, dass die auswählbaren Ernteprozeßstrategien (11a) jeweils auf die Zielvorgabe der Einstellung oder der Optimierung mindestens eines Ernteprozessparameters wie "Ausdruschverluste", "Bruchkornanteil", "Abscheideverluste", "Reinigungsverluste", "Schlupf-Dreschwerk-Antrieb", "Kraftstoffverbrauch" durch eine entsprechende Vorgabe von Dreschwerksparametern wie "Trommeldrehzahl", "Korbweite" gerichtet sind.

8. Mähdrescher nach Anspruch 5 oder 6, **dadurch gekennzeichnet, dass** mindestens einem Ernteprozessparameter wie "Ausdruschverluste", "Bruchkornanteil", "Abscheideverluste", "Reinigungsverluste", "Schlupf-Dreschwerk-Antrieb", "Kraftstoffverbrauch" ein erstes Kennlinienfeld (A,C,E,G,I) und ein zweites Kennlinienfeld (B,D,F,H,J) zugeordnet sind, für die dieser Ernteprozessparameter jeweils die Ausgangsgröße bildet, dass für das erste Kennlinienfeld (A,C,E,G,I) der weitere Ernteprozessparameter "Schichthöhe" und der Dreschwerksparameter "Trommeldrehzahl" die Eingangsgrößen bilden und dass für das zweite Kennlinienfeld (B,D,F,H,J) der weitere Ernteprozessparameter "Schichthöhe" und der Dreschwerksparameter "Korbweite" die Eingangsgrößen bilden.

9. Mähdrescher nach einem der Ansprüche 5 bis 7, **dadurch gekennzeichnet, dass** die Rechenvorrichtung (12) mindestens ein Kennlinienfeld (A-J) in Abhängigkeit von dem Ernteprozesszustand auswählt und der Ermittlung des mindestens einen Dreschwerksparameters zugrunde legt.

10. Mähdrescher nach einem der vorhergehenden Ansprüche, **dadurch gekennzeichnet, dass** die Rechenvorrichtung (12) das mindestens eine Kennlinienfeld (A-J) im laufenden Erntebetrieb, insbesondere zyklisch, auf den Ernteprozesszustand abgleicht, vorzugsweise, dass in dem Speicher (11) mindestens ein Initialkennlinienfeld (11c) hinterlegt ist und dass bei der ersten Ermittlung des mindestens einen Dreschwerksparameters die Rechenvorrichtung (12) die Ermittlung basierend auf dem Initialkennlinienfeld (11c) vornimmt.

11. Mähdrescher nach einem der vorhergehenden Ansprüche, **dadurch gekennzeichnet, dass** in dem Speicher (11) mindestens eine Umsetzungsvorschrift (11d) hinterlegt ist, nach der die Rechenvorrichtung (12) basierend auf dem Systemmodell (11b) die Umsetzung der jeweils ausgewählten Ernteprozeßstrategie (11a) durch Ermittlung des mindestens einen Dreschwerksparameters vornimmt.

12. Mähdrescher nach Anspruch 10, **dadurch gekennzeichnet, dass** eine Umsetzungsvorschrift (11d) die Ermittlung des mindestens einen Dreschwerksparameters in einem Steuervorgang umsetzt, vorzugsweise, dass die Rechenvorrichtung (12) zur Ermittlung des mindestens einen Dreschwerksparameters als Kennfeldsteuerung arbeitet.

13. Mähdrescher nach einem der vorhergehenden Ansprüche, **dadurch gekennzeichnet, dass** zumindest eine auswählbare Ernteprozeßstrategie (11a) mindestens zwei Teilstrategien umfasst, die jeweils auf die Einstellung oder Optimierung eines Ernteprozessparameters gerichtet sind.

14. Mähdrescher nach einem der vorhergehenden Ansprüche, **dadurch gekennzeichnet, dass** mindestens zwei ausgewählte Ernteprozeßstrategien (11a) oder mindestens zwei Teilstrategien einer ausgewählten Ernteprozeßstrategie (11a) im Hinblick auf ein und denselben Dreschwerksparameter miteinander konkurrieren, vorzugsweise, dass eine Umsetzungsvorschrift zur gleichzeitigen Umsetzung der miteinander konkurrierenden Strategien eine Mehrzieloptimierung umfasst.

15. Mähdrescher nach einem der vorhergehenden Ansprüche, **dadurch gekennzeichnet, dass** eine Umsetzungsvorschrift (11d) mindestens eine Prämisse umfasst, auf deren Basis die Rechenvorrichtung (12) bei der autonomen Ermittlung des mindestens einen Dreschwerksparameters eine Priorisierung zwischen ausgewählten Ernteprozeßstrategien (11a) und/oder zwischen Teilstrategien einer ausgewählten Ernteprozeßstrategie (11a) und/oder zwischen einzustellenden oder zu optimierenden Ernteprozessparametern und/oder zwischen vorzugebenden Dreschwerksparametern vornimmt.

16. Mähdrescher nach Anspruch 15, **dadurch gekennzeichnet, dass** eine Prämisse darin besteht, dass die Rechenvorrichtung (12) die Einstellung oder Optimierung des Bruchkornanteils stets vorgelagert zu der Einstellung oder Optimierung der Ausdruschverluste vornimmt.

17. Mähdrescher nach Anspruch 14 oder 15, **dadurch gekennzeichnet, dass** eine Prämisse darin besteht, dass für die Einstellung oder Optimierung der Ausdruschverluste die Vorgabe der Korbweite (1b) präferiert ist gegenüber der Vorgabe der Trommeldrehzahl (1a).

18. Mähdrescher nach einem der Ansprüche 14 bis 16, **dadurch gekennzeichnet, dass** eine Prämisse darin besteht, dass für die Einstellung oder Optimierung des Bruchkornanteils die Vorgabe die Trommeldrehzahl (1a) präferiert ist gegenüber der Vorgabe der Korbweite (1b).

19. Mähdrescher nach einem der vorhergehenden Ansprüche, **dadurch gekennzeichnet, dass** für die Ernteprozeßstrategie der Einstellung oder Optimierung des Ernteprozessparameters "Abscheideverluste" eine Umsetzungsvorschrift darin besteht, dass die Rechenvorrichtung (12) auf ein Ansteigen der Schichthöhe in dem Dreschwerk (1) basierend auf dem Systemmodell (11b) ein Ansteigen der Trommeldrehzahl (1a) vorgibt.

## Claims

1. A combine harvester with a threshing assembly (1) for threshing harvested material which has been picked up to obtain grain, and with a driver assistance system (10) for controlling the threshing assembly (1), wherein the driver assistance system (10) comprises a memory (11) for storing data and a computing device (12) for processing the data stored in the memory (11), **characterized in that** the threshing assembly (1) together with the driver assistance system (10) forms an automated threshing unit (14), with a plurality of selectable harvesting process strategies (11a) being stored in the memory (11) and, in order to implement the respectively selected harvesting process strategy (11a), with the computing device (12) being configured to determine at least one threshing assembly parameter (1a, 1b) autonomously and specify it to the threshing assembly (1) and wherein, in order to implement the respectively selected harvesting process strategy (11b), the computing device (12) is configured to determine at least one threshing assembly parameter (1a, 1b) cyclically and to specify it to the threshing assembly (1), wherein
a functional system model (11b) for at least a part of the combine harvester is stored in the memory (11), and **in that** the computing device (12) is configured to carry out the autonomous determination of the at least one threshing assembly parameter (1a, 1b) based on the system model (11b), and **in that** the computing device (12) cyclically aligns the system model (11b) with the current harvesting process state during an ongoing harvesting operation, wherein the system model (11b) depicts at least a portion of the functional interrelationships between a harvesting process parameter such as "threshing losses", "damaged grain fraction", "separation losses", "cleaning losses", "slippage - threshing assembly drive", "fuel consumption", at least one further parameter, in particular at least one threshing assembly parameter such as "drum speed", "concave width", and at least one further harvesting process parameter such as "layer depth", wherein, in order to depict the functional interrelationships, at least one performance map (A-J) is assigned to at least one harvesting process parameter, and **in that** this harvesting process parameter is the output variable of the at least one performance map (A-J), wherein the harvesting process parameter "layer depth" and a threshing assembly parameter, preferablyin particular the threshing assembly parameter "drum speed" or the threshing assembly parameter "concave width" are the input variables for the at least one performance map (A-J), wherein an implementation instruction for the harvesting process strategy for setting or optimization of the harvesting process parameter "threshing losses" consists in the computing device specifying, on the basis of the system model, an increase in the drum speed (1a) and/or a reduction in the concave width (1b) in response to a reduction in the layer depth in the threshing assembly.

2. The combine harvester according to one of the preceding claims, **characterized in that** the harvesting process state includes field crop information such as "field crop density", "threshability", "field crop moisture" and/or harvesting process parameters such as "threshing losses", "damaged grain fraction", "layer depth", "separation losses", "cleaning losses", "slippage - threshing assembly drive", "fuel consumption" and/or threshing assembly parameters such as "drum speed", "concave width" and/or environmental information such as "ambient temperature", "ambient humidity".

3. The combine harvester according to one of the preceding claims, **characterized in that** a sensor system (15) is provided for detecting at least a portion of the harvesting process state.

4. The combine harvester according to one of the preceding claims, **characterized in that** an input/output device (19) is provided and **in that** at least a portion of the harvesting process state can be input via the input/output device (19).

5. The combine harvester according to claim 6, **characterized in that** the computing device (12) generates queries relating to the current harvesting process state and outputs via the input/output device (19) and **in that**, in response to a query, at least a portion of the current harvesting process state can be input via the input/output device (19).

6. The combine harvester according to one of the preceding claims, **characterized in that** at least one initial model (11c) is stored in the memory (11) and **in that** in the first determination of the at least one threshing assembly parameter, the computing device (12) carries out the determination based on the initial model (11c), preferably **in that** at least two initial models (11c) are stored in the memory (11) and **in that** the computing device (12) selects an initial model (11c) as a function of the harvesting process state, the subsequent determination of the threshing assembly parameter being based on the initial model.

7. The combine harvester according to one of the preceding claims, **characterized in that** the selectable harvesting process strategies (11a) are respectively directed to the target objective of setting or optimizing at least one harvesting process parameter such as "threshing losses," "damaged grain fraction," "separation losses," "cleaning losses," "slippage - threshing assembly drive," "fuel consumption" by correspondingly specifying threshing assembly parameters such as "drum speed," "concave width".

8. The combine harvester according to claim 5 or 6, **characterized in that** a first performance map (A,C,E,G,I) and a second performance map (B,D,F,H,J) are assigned to at least one harvesting process parameter such as "threshing losses", "damaged grain fraction", "separation losses", "cleaning losses", "slippage - threshing assembly drive", "fuel consumption", for which this harvesting process parameter forms the output variable in each case, **in that** the further harvesting process parameter "layer depth" and the threshing assembly parameter "drum speed" form the input variables for the first performance map (A,C,E,G,I), and **in that** the further harvesting process parameter "layer depth" and the threshing assembly parameter "concave width" form the input variables for the second performance map (B,D,F,H, J).

9. The combine harvester according to one of claims 5 to 7, **characterized in that** the computing device (12) selects the at least one performance map (A-J) as a function of the harvesting process state and forms the basis of the determination of the at least one threshing assembly parameter.

10. The combine harvester according to one of the preceding claims, **characterized in that** the computing device (12) aligns the at least one performance map (A-J) with the harvesting process state during an ongoing harvesting operation, in particular cyclically, preferably **in that** at least one initial performance map (11c) is stored in the memory (11) and **in that** during the first determination of the at least one threshing assembly parameter, the computing device (12) carries out the determination on the basis of the initial performance map (11c).

11. The combine harvester according to one of the preceding claims, **characterized in that** at least one implementation instruction (11d) is stored in the memory (11), according to which on the basis of the system model (11b), the computing device (12) carries out the implementation of the respective selected harvesting process strategy (11a) by determining the at least one threshing assembly parameter.

12. The combine harvester according to claim 10, **characterized in that** an implementation instruction (11d) implements the determination of the at least one threshing assembly parameter in a control procedure, preferably **in that** the computing device (12) operates as a characteristic map control in order to determine the at least one threshing assembly parameter.

13. The combine harvester according to one of the preceding claims, **characterized in that** at least one selectable harvesting process strategy (11a) comprises at least two sub-strategies which are directed to setting or optimization of a harvesting process parameter.

14. The combine harvester according to one of the preceding claims, **characterized in that** at least two selected harvesting process strategies (11a) or at least two sub-strategies of a selected harvesting process strategy (11a) conflict with one another with respect to one and the same threshing assembly parameter, preferably in that an implementation instruction comprises a multi-objective optimization for the simultaneous implementation of the mutually conflicting strategies.

15. The combine harvester according to one of the preceding claims, **characterized in that** an implementation instruction (11d) comprises at least one premise on the basis of which, during the autonomous determination of the at least one threshing assembly parameter, the computing device (12) carries out a prioritization between selected harvesting process strategies (11a) and/or between sub-strategies of a selected harvesting process strategy (11a) and/or between harvesting process parameters to be set or optimized and/or between threshing assembly parameters to be specified.

16. The combine harvester according to claim 15, **characterized in that** one premise consists in the computing device always carrying out setting or optimization of the damaged grain fraction before setting or optimization of the threshing losses.

17. The combine harvester according to claim 14 or claim 15, **characterized in that** one premise consists in preferring the specification of the concave width (1b) over the specification of the drum speed (1a) for setting or optimization of the threshing losses.

18. The combine harvester according to one of claims 14 to 16, **characterized in that** one premise consists in preferring the specification of the drum speed (1a) over the specification of the concave width (1b) for setting or optimization of the damaged grain fraction.

19. The combine harvester according to one of the preceding claims, **characterized in that** an implementation instruction for the harvesting process strategy for setting or optimization of the harvesting process parameter "separation losses" consists in the computing device (12) specifying, on the basis of the system model (11b), an increase in the drum speed (1a) in response to an increase in the layer depth in the threshing assembly (1).

## Revendications

1. Moissonneuse-batteuse comprenant un système de battage (1) pour battre du produit de récolte ramassé en produit en grains et comprenant un système d'assistance à la conduite (10) pour commander le système de battage (1), le système d'assistance à la conduite (10) incluant une mémoire (11) pour enregistrer des données et un dispositif de calcul (12) pour traiter les données enregistrées dans la mémoire (11),
**caractérisée en ce que**
le système de battage (1) forme conjointement avec le système d'assistance à la conduite (10) un automate de battage (14) par le fait que dans la mémoire (11) sont enregistrées une pluralité de stratégies de processus de récolte sélectionnables (11à) et par le fait que le dispositif de calcul (12) est agencé pour déterminer de manière autonome au moins un paramètre de système de battage (1a, 1b) et le prescrire au système de battage (1) afin de mettre en œuvre la stratégie de processus de récolte respectivement sélectionnée (11a), et le dispositif de calcul (12) étant agencé pour déterminer cycliquement au moins un paramètre de système de battage (1a, 1b) et le prescrire au système de battage (1) afin de mettre en oeuvre la stratégie de processus de récolte respectivement sélectionnée (11b),
un modèle de système fonctionnel (11b) pour au moins une partie de la moissonneuse-batteuse étant enregistré dans la mémoire (11), et que le dispositif de calcul (12) est agencé pour effectuer la détermination autonome de l'au moins un paramètre de système de battage (1a, 1b) sur la base du modèle de système (11b), et que le dispositif de calcul (12) adapte cycliquement en cours de récolte le modèle de système (11b) à l'état de processus de récolte instantané, le modèle de système (11b) représentant au moins une partie des relations fonctionnelles entre un paramètre de processus de récolte comme « pertes de battage », « proportion de grains cassés », « pertes à la séparation », « pertes au nettoyage », « entraînement de système de battage glissant », « consommation de carburant », au moins un autre paramètre, à savoir un paramètre de système de battage comme « vitesse de rotation de batteur », « écartement du contre-batteur » et/ou au moins un autre paramètre de processus de récolte comme « hauteur de couche », au moins un diagramme de courbes caractéristiques (A-J) étant associé à au moins un paramètre de processus de récolte pour représenter les relations fonctionnelles, et que ledit paramètre de processus de récolte est la grandeur de sortie de l'au moins un diagramme de courbes caractéristiques (A-J), le paramètre de processus de récolte « hauteur de couche » et un paramètre de système de battage, à savoir le paramètre de système de battage « vitesse de rotation de batteur » ou le paramètre de système de battage « écartement du contre-batteur » étant les grandeurs d'entrée pour l'au moins un diagramme de courbes caractéristiques (A-J), une consigne de mise en œuvre, pour la stratégie de processus de récolte d'établissement ou d'optimisation du paramètre de processus de récolte « pertes de battage » consistant **en ce que** le dispositif de calcul, à la suite d'une diminution de la hauteur de couche dans le système de battage, sur la base du modèle de système, prescrit une élévation de la vitesse de rotation de batteur (1a) et/ou une diminution de l'écartement du contre-batteur (1b).

2. Moissonneuse-batteuse selon une des revendications précédentes, **caractérisée en ce que** l'état de processus de récolte inclut des informations sur la culture comme « densité de culture », « battabilité », « humidité de la culture » et/ou des paramètres de processus de récolte comme « pertes de battage », « proportion de grains cassés », « hauteur de couche », « pertes à la séparation », « pertes au nettoyage », « entraînement de système de battage glissant », « consommation de carburant » et/ou des paramètres de système de battage comme « vitesse de rotation de batteur », « écartement du contre-batteur » et/ou des informations sur l'environnement comme
« température ambiante », « humidité ambiante ».

3. Moissonneuse-batteuse selon une des revendications précédentes, **caractérisée en ce qu'**un agencement de capteur (15) est prévu pour détecter au moins une partie de l'état de processus de récolte.

4. Moissonneuse-batteuse selon une des revendications précédentes, **caractérisée en ce qu'**un dispositif d'entrée/sortie (19) est prévu, et **en ce qu'**au moins une partie de l'état de processus de récolte peut être entrée par l'intermédiaire du dispositif d'entrée/sortie (19).

5. Moissonneuse-batteuse selon la revendication 6, **caractérisée en ce que** le dispositif de calcul (12) génère des interrogations relatives à l'état de processus de récolte instantané et les transmet par l'intermédiaire du dispositif d'entrée/sortie (19), et **en ce qu'**à la suite d'une interrogation, au moins une partie de l'état de processus de récolte peut être entrée par l'intermédiaire du dispositif d'entrée/sortie (19).

6. Moissonneuse-batteuse selon une des revendications précédentes, **caractérisée en ce que** dans la mémoire (11) est enregistré au moins un modèle initial (11c), et **en ce que**, lors de la première détection du au moins un paramètre de système de battage, le dispositif de calcul (12) effectue la détermination sur la base du modèle initial (11c), préférentiellement **en ce que** dans la mémoire (11) sont enregistrés au moins deux modèles initiaux (11c), et **en ce qu'**en fonction de l'état de processus de récolte, le dispositif de calcul (12) sélectionne un modèle initial (11c) sur lequel se base la détermination consécutive des paramètres de système de battage.

7. Moissonneuse-batteuse selon une des revendications précédentes, **caractérisée en ce que** les stratégies de processus de récolte sélectionnables (11à) sont dirigées vers l'objectif de régler ou d'optimiser au moins un paramètre de processus de récolte comme « pertes de battage », « proportion de grains cassés », « pertes à la séparation », « pertes au nettoyage », « entraînement de système de battage glissant », « consommation de carburant » par l'intermédiaire d'une prescription correspondante de paramètres de système de battage comme « vitesse de rotation de batteur », « écartement du contre-batteur ».

8. Moissonneuse-batteuse selon la revendication 5 ou 6, **caractérisée en ce qu'**un premier diagramme de courbes caractéristiques (A, C, E, G, I) et un deuxième diagramme de courbes caractéristiques (B, D, F, H, J), pour lesquels ce paramètre de processus de récolte forme respectivement la grandeur de sortie, sont associés au moins à un paramètre de processus de récolte comme « pertes de battage », « proportion de grains cassés », « pertes à la séparation », « pertes au nettoyage », « entraînement de système de battage glissant », « consommation de carburant », et que, pour le premier diagramme de courbes caractéristiques (A, C, E, G, I), l'autre paramètre de processus de récolte « hauteur de couche » et le paramètre de système de battage « vitesse de rotation de batteur » forment les grandeurs d'entrée et que, pour le deuxième diagramme de courbes caractéristiques (B, D, F, H, J), l'autre paramètre de processus de récolte « hauteur de couche » et le paramètre de système de battage « écartement du contre-batteur » forment les grandeurs d'entrée.

9. Moissonneuse-batteuse selon une des revendications 5 à 7, **caractérisée en ce que** le dispositif de calcul (12) sélectionne au moins un diagramme de courbes caractéristiques (A-J) en fonction de l'état de processus de récolte et s'en sert de base pour déterminer le moins un paramètre de système de battage.

10. Moissonneuse-batteuse selon une des revendications précédentes, **caractérisée en ce que** le dispositif de calcul (12) adapte le au moins un diagramme de courbes caractéristiques (A-J) en cours de récolte, en particulier cycliquement, à l'état de processus de récolte, préférentiellement **en ce que** dans la mémoire (11) est enregistré au moins un diagramme de courbes caractéristiques initial (11c), et **en ce que**, lors de la première détermination du au moins un paramètre de système de battage, le dispositif de calcul (12) effectue la détermination sur la base du diagramme de courbes caractéristiques initial (11c).

11. Moissonneuse-batteuse selon une des revendications précédentes, **caractérisée en ce que** dans la mémoire (11) est enregistrée au moins une consigne de mise en oeuvre (11d) selon laquelle le dispositif de calcul (12) effectue, sur la base du modèle de système (11b), la mise en oeuvre de la stratégie de processus de récolte respectivement sélectionnée (11à) en déterminant le au moins un paramètre de système de battage.

12. Moissonneuse-batteuse selon la revendication 10, **caractérisée en ce qu'**une consigne de mise en oeuvre (11d) met en oeuvre la détermination du au moins un paramètre de système de battage dans une opération de commande, préférentiellement **en ce que** le dispositif de calcul (12) travaille comme commande de diagramme caractéristique pour déterminer le au moins un paramètre de système de battage.

13. Moissonneuse-batteuse selon une des revendications précédentes, **caractérisée en ce qu'**au moins une stratégie de processus de récolte sélectionnable (11à) inclut au moins deux stratégies partielles qui visent respectivement à régler ou à optimiser le paramètre de processus de récolte.

14. Moissonneuse-batteuse selon une des revendications précédentes, **caractérisée en ce qu'**au moins deux stratégies de processus de récolte sélectionnées (11à) ou au moins deux stratégies partielles d'une stratégie de processus de récolte sélectionnée (11à) sont en concurrence l'une avec l'autre sur un seul et même paramètre de système de battage, préférentiellement **en ce qu'**une consigne de mise en oeuvre pour la mise en oeuvre simultanée des stratégies concurrentes l'une avec l'autre inclut une optimisation multi-objectif.

15. Moissonneuse-batteuse selon une des revendications précédentes, **caractérisée en ce qu'**une consigne de mise en oeuvre (11d) inclut au moins une prémisse sur la base de laquelle le dispositif de calcul (12) effectue, lors de la détermination autonome du au moins un paramètre de système de battage, une priorisation entre des stratégies de processus de récolte sélectionnées (11à) et/ou entre des stratégies partielles d'une stratégie de processus de récolte sélectionnée (11à) et/ou entre des paramètres de processus de récolte à établir ou à optimiser et/ou entre des paramètres de système de battage à prescrire.

16. Moissonneuse-batteuse selon la revendication 15, **caractérisée en ce qu'**une prémisse consiste **en ce que** le dispositif de calcul (12) effectue l'établissement ou l'optimisation de la proportion de grains cassés toujours préalablement à l'établissement ou l'optimisation des pertes de battage.

17. Moissonneuse-batteuse selon la revendication 14 ou 15, **caractérisée en ce qu'**une prémisse consiste **en ce que**, pour l'établissement ou l'optimisation des pertes de battage, la prescription de l'écartement du contre-batteur (1b) est préférée à la prescription de la vitesse de rotation de batteur (1a).

18. Moissonneuse-batteuse selon une des revendications 14 à 16, **caractérisée en ce qu'**une prémisse consiste en ce que, pour l'établissement ou l'optimisation de la proportion de grains cassés, la prescription de la vitesse de rotation de batteur (1a) est préférée à la prescription de l'écartement du contre-batteur (1b).

19. Moissonneuse-batteuse selon une des revendications précédentes, **caractérisée en ce que** pour la stratégie de processus de récolte d'établissement ou d'optimisation du paramètre de processus de récolte « pertes à la séparation », une consigne de mise en oeuvre consiste **en ce que** le dispositif de calcul (12), à la suite d'une augmentation de la hauteur de couche dans le système de battage (1), sur la base du modèle de système (11b), prescrit une élévation de la vitesse de rotation de batteur (1a).
